# EUROPÄISCHE PATENTANMELDUNG

(11) **EP 0 943 780 A2**
(43) Veröffentlichungstag der Anmeldung: **22.09.1999**
(21) Anmeldenummer: 99104060.1
(22) Anmeldetag: 17.03.1999
(51) Int. Cl.: E21B 10/58

(54) **Bohrwerkzeug**

(30) Priorität: 18.03.1998 DE 19811887; 09.09.1998 DE 29816203 U
(71) Anmelder: PLICA WERKZEUGFABRIK AG, 8753 Mollis (CH)
(72) Erfinder: Jenny, Rudolf Plica Werkzeugfabrik AG, 8753 Mollis (CH)
(74) Vertreter: Sties, Jochen

(57) **Zusammenfassung**

Ein Bohrwerkzeug mit einem Schaft (10) und einem Bohrkopf (14), der auf seiner vom Schaft abgewandten Seite mit einer Brechplatte (22), die mindestens eine Brechkante (24, 26) aufweist, und mit mehreren Brechteilen (28, 30) versehen ist, ist dadurch gekennzeichnet, daß jedes Brechteil als Brechbolzen (28, 30) mit rundem Querschnitt ausgebildet ist.

## Beschreibung

Die Erfindung betrifft ein Bohrwerkzeug mit einem Schaft und einem Bohrkopf, der auf seiner vom Schaft abgewandten Seite mit einer Brechplatte, die mindestens eine Brechkante aufweist, und mit mehreren Brechteilen versehen ist.

Ein solches Bohrwerkzeug ist aus der deutschen Gebrauchsmusterschrift DE 297 03 363 U1 bekannt. Als Brechteile werden hier rechteckige Nebenbrechplatten verwendet, die mit jeweils einer Brechkante versehen sind. Problematisch bei dieser Gestaltung ist die sichere Befestigung der beiden Nebenbrechplatten. Eine rechteckige Aufnahme ist mit der erforderlichen Genauigkeit nur sehr schwer herstellbar. Da vorteilhafterweise die Nebenbrechplatten über den Außenumfang des Bohrkopfes hinausragen, muß die Aufnahme der Nebenbrechplatten außerdem in radialer Richtung auf der Außenseite offen ausgeführt werden. Insgesamt besteht daher die Gefahr, daß die Nebenbrechplatten sich bei hohen Belastungen lockern und aus der Aufnahme herausfallen.

Ausgehend von diesem bekannten Stand der Technik besteht die Aufgabe der Erfindung darin, ein Bohrwerkzeug der eingangs genannten Art bereitzustellen, bei dem die Brechteile besonders einfach und zuverlässig im Bohrkopf aufgenommen sind.

Diese Aufgabe wird gemäß der Erfindung bei einem Bohrwerkzeug der eingangs genannten Art dadurch gelöst, daß jedes Brechteil als Brechbolzen mit rundem Querschnitt ausgebildet ist. Somit kann eine Aufnahme mit ebenfalls rundem Querschnitt verwendet werden, die besonders einfach mit hoher Genauigkeit hergestellt werden kann.

Gemaß einer bevorzugten Ausführungsform der Erfindung ist vorgesehen, daß sich die Längsachse der Brechbolzen schräg zur Längsachse des Bohrwerkzeugs erstreckt. Dies ermöglicht, eine Aufnahme mit allseitig geschlossener Wandung zu verwenden, während gleichzeitig die freien Enden der Brechbolzen über den Außenumfang des Bohrkopfes hinausragen.

Gemäß der bevorzugten Ausführungsform der Erfindung ist weiterhin vorgesehen, daß jeder Brechbolzen jeweils eine sich geradlinig erstreckende Brechkante aufweist. Die Brechkanten sorgen für eine gute Zerkleinerung des Bohrguts. Vorzugsweise ist vorgesehen, daß die Brechkante jedes Brechbolzens sich in eine Richtung erstreckt, die von einer bezüglich des Bohrkopfes radialen Richtung abweicht. Diese Gestaltung beruht auf der Erkenntnis, daß für eine gute Zerkleinerung des Bohrguts eine Ausrichtung der Brechbolzen-Brechkanten vorteilhaft ist, die sich von der üblicherweise radialen Ausrichtung der Brechkanten unterscheidet.

Weitere vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den Zeichnungen dargestellt ist. In diesen zeigen:
- Figur 1 eine Draufsicht auf den Bohrkopf eines erfindungsgemäßen Bohrwerkzeugs;
- Figur 2 eine erste Seitenansicht des Bohrkopfes von Figur 1 mit sich daran anschließendem Schaft;
- Figur 3 eine zweite Seitenansicht des Bohrkopfes von Figur 1 mit sich daran anschließendem Schaft; und
- Figur 4 eine dritte Seitenansicht des Bohrkopfes von Figur 1 mit sich daran anschließendem Schaft.

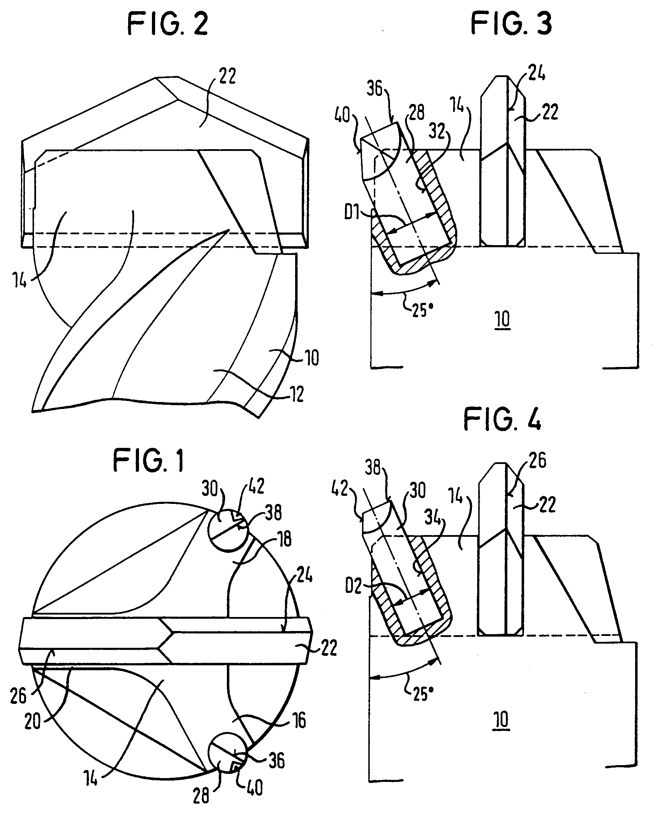

In den Figuren 1 bis 4 ist ein erfindungsgemäßes Bohrwerkzeug dargestellt. Dieses enthält einen Schaft 10, der mit Bohrgutabführnuten 12 versehen ist. An den Schaft 10 schließt sich ein Bohrkopf 14 an. Dieser ist mit drei Armen 16, 18, 20 versehen, die nach Art eines hohlkehligen Dreiecks angeordnet sind. Der zwischen jeweils zwei benachbarten Armen der drei Arme 16, 18, 20 befindliche Freiraum dient zur Ableitung des zerkleinerten Bohrguts zu den Bohrgutabführnuten 12.

Im Arm 20 ist eine Brechplatte 22 eingelassen, die in einer Seitenansicht gesehen giebelförmig ausgestaltet ist (siehe Figur 2). Die Brechplatte 22 ist mit zwei Schneiden 24, 26 versehen, von denen die eine auf der einen und die andere auf der anderen Seite der Mittellängsebene der Brechplatte 22 angeordnet ist. Die Brechplatte 22 steht mit ihren beiden radialen Enden über den Außenumfang des Bohrkopfes 14 hinaus.

Auf jedem der Arme 16, 18 ist jeweils ein Brechbolzen 28 bzw. 30 angeordnet. Jeder Brechbolzen hat einen kreisförmigen Querschnitt und ist in einer Aufnahme 32 bzw. 34 aufgenommen, die ebenfalls einen kreisförmigen Querschnitt hat. Die Durchmesser der beiden Brechbolzen 28, 30 unterscheiden sich voneinander; der Brechbolzen 28 hat einen Durchmesser D1, der größer als der Durchmesser D2 des Brechbolzens 30 ist. Beispielsweise kann ein Durchmesser D1 von 8,2 mm verwendet werden, und der Durchmesser D2 kann 6 mm betragen.

Die Längsachse jedes Brechbolzens ist schräg zur Längsachse des Bohrwerkzeugs ausgerichtet. Bei der hier gezeigten Ausführungsform schließen die Längsachse jedes Brechbolzens und die Längsachse des Bohrwerkzeugs einen Winkel von 25° miteinander ein. Diese Anordnung ermöglicht, die Brechbolzen 28, 30 fest im Material des Bohrkopfes zu verankern, da auch radial außerhalb jeder Aufnahme 32, 34 noch ausreichend Material am Bohrkopf vorhanden ist, während gleichzeitig die freien, aus den Armen 16, 18 hervorstehenden Enden der Brechbolzen 28, 30 über den Außenumfang des Bohrkopfes hinausragen. Die Anordnung ist jedoch so gewählt, daß die Enden der Brechplatte 22 geringfügig weiter über den Bohrkopf hinausstehen als die außenliegenden Ränder der Brechbolzen. Wenn sich beispielsweise die Außenränder der Brechbolzen auf einem Kreis mit einem Durchmesser von 42 mm befinden, befinden sich die Enden der Brechplatte auf einem Kreis mit einem Durchmesser von 42,37 mm.

Die beiden Brechbolzen 28, 30 sind jeweils mit einer Brechkante 36 bzw. 38 versehen, die sich geradlinig erstreckt. Jede Brechkante erstreckt sich in einer von einer radialen Richtung abweichenden Richtung, wobei die beiden Brechkanten so angeordnet sind, daß sieh eine gedachte Verlängerung in einem Punkt schneidet, der in der Mittelebene der Brechplatte 22 im Bereich des Armes 20 liegt.

Um ein Ausbrechen der Brechholzen zu verhindern und die Standzeiten zu erhöhen, ist jeder Brechbolzen an seiner Außenseite mit einer abgeschrägten Fläche 40 bzw. 42 versehen. Dies verhindert hervorstehende Kanten, die während des Bohrens beschädigt werden könnten.

## Patentansprüche

1. Bohrwerkzeug mit einem Schaft (10) und einem Bohrkopf (14), der auf seiner vom Schaft abgewandten Seite mit einer Brechplatte (22), die mindestens eine Brechkante (24, 26) aufweist, und mit mehreren Brechteilen (28, 30) versehen ist,
dadurch gekennzeichnet, daß jedes Brechteil als Brechbolzen (28, 30) mit rundem Querschnitt ausgebildet ist.

2. Bohrwerkzeug nach Anspruch 1, dadurch gekennzeichnet, daß sich die Längsachse jedes Brechbolzens (28, 30) schräg zur Längsachse des Bohrwerkzeugs erstreckt.

3. Bohrwerkzeug nach Anspruch 2, dadurch gekennzeichnet, daß das von dem Schaft abgewandte, freie Ende der Brechbolzen (28, 30) über den Außenumfang des Bohrkopfes (14) hinausragt.

4. Bohrwerkzeug nach einem der Ansprüche 1 bis 3, dadurch gekennzeichnet, daß die radial außenliegenden Enden der Brechplatte (22) über den Außenumfang des Bohrkopfes (14) hinausragen.

5. Bohrwerkzeug nach Anspruch 4, dadurch gekennzeichnet, daß die radial außenliegenden Enden der Brechplatte (22) weiter über den Außenumfang des Bohrkopfes (14) hinausragen als die freien Enden der Brechbolzen (28, 30).

6. Bohrwerkzeug nach einem der Ansprüche 1 bis 5, dadurch gekennzeichnet, daß jeder Brechbolzen (28, 30) jeweils eine sich geradlinig erstreckende Brechkante (36, 38) aufweist.

7. Bohrwerkzeug nach Anspruch 6, dadurch gekennzeichnet, daß die Brechkante (36, 38) jedes Brechbolzens (28, 30) sich in einer Richtung erstreckt, die von einer bezüglich des Bohrkopfes (14) radialen Richtung abweicht.

8. Bohrwerkzeug nach Anspruch 6 oder 7, dadurch gekennzeichnet, daß die Brechkanten (36, 38) der Brechbolzen (28, 30) so ausgerichtet sind, daß der Schnittpunkt ihrer gedachten Verlängerung in der Mittelebene der Brechplatte (22) liegt.

9. Bohrwerkzeug nach einem der vorstehenden Ansprüche, dadurch gekennzeichnet, daß der Bohrkopf (14) drei Arme (16, 18, 20) aufweist, wobei die Brechbolzen (28, 30) auf jeweils einem der Arme (16, 18) angeordnet sind und der dritte Arm (20) einen Teil der Brechplatte (22) aufnimmt.

10. Bohrwerkzeug nach Anspruch 9, dadurch gekennzeichnet, daß der nicht von dem dritten Arm (20) aufgenommene Teil der Brechplatte (22) frei aus dem Bohrkopf hervorsteht.
